# EUROPEAN PATENT APPLICATION

(11) **EP 3 988 942 A1**
(43) Date of publication of application: **27.04.2022**
(21) Application number: 20831177.9
(22) Date of filing: 23.06.2020
(51) Int. Cl.: G01N 35/04

(54) **AUTOMATED ANALYSIS DEVICE**

(30) Priority: 24.06.2019 JP 2019116085
(71) Applicant: Sekisui Medical Co., Ltd., Tokyo 103-0027 (JP)
(72) Inventor: ISHIOKA, Seiichiro, Tokyo 103-0027 (JP); MINAMI, Yasuo, Tokyo 103-0027 (JP); ASAI, Tomohide, Tokyo 103-0027 (JP); IWAHASHI, Kyoichi, Tokyo 103-0027 (JP)
(74) Representative: Schäfer, Matthias W.
(86) International application number: PCT/JP2020/024560
(87) International publication number: WO 2020/262359

(57) **Abstract**

There is provided an automated analysis device capable of transferring a rack to a predetermined instrument extraction position efficiently and rapidly, the rack being loaded with instruments to be used for an analysis process. An automated analysis device of the invention includes a conveyance unit to raise and lower a plurality of racks in a vertically stacked state to convey the racks into an analyte processing space, the racks being loaded with instruments to be used for analyte processing. The conveyance unit includes a movement mechanism to move an uppermost rack R1 from a rack standby position to an extraction position with guidance of a protrusion 80 and a recess 82 while maintaining a state of slidable protrusion and recess engagement between the uppermost rack R1 and a rack R below the uppermost rack R1.

## Description

### TECHNICAL FIELD

The present invention relates to an automated analysis device capable of obtaining measurement information on various analysis items by processing a sample (analyte) such as blood or urine with various reagents, and by measuring the processed sample.

### BACKGROUND ART

In the related art, various forms of automated analysis devices such as a blood coagulation analysis device and an analysis and measurement device using immunoassay are known which are capable of obtaining measurement information on various analysis items by processing a biological sample such as blood or urine with various reagents, and by measuring the processed biological sample. For example, an analyte as a biological sample is dispensed from an analyte container into a reaction container, the dispensed analyte is mixed with a reagent according to a measurement item, and various measurements and analyses are performed thereon.

In such an analysis device, for example, instruments such as a nozzle tip to suction an analyte and a reaction container (cuvette) into which the analyte is to be dispensed are used, and when the instruments are disposable to avoid contamination between analytes, a predetermined number of the instruments are supplied into the analysis device in a state where the instruments are collectively loaded into a rack. For example, in Patent Document 1, a predetermined number of nozzle tips and reaction containers are loaded into a rack, as unused disposable components, and a plurality of the racks are supplied to a predetermined station for processing and conveyance in a vertically stacked state by a lifting mechanism of a component supply device.

Specifically, the component supply device includes a rack separation device to separate only an uppermost rack of the plurality of racks in a stacked state from a group of the other racks such that the uppermost rack remains at a first station, and to hold the uppermost rack, the racks being lifted to the first station and upward from a maximum lowered position by a lifting platform at which the racks are set with respect to the component supply device, and a rack transfer device to move the uppermost rack from the first station to a second station for the extraction of the components, the uppermost rack being separated from the group of the other racks by lowering of the lifting platform.

### CITATION LIST

### PATENT DOCUMENT

Patent Document 1: JP 4454904 B2

### SUMMARY OF THE INVENTION

### PROBLEM TO BE SOLVED BY THE INVENTION

By the way, the above-described analysis device disclosed in Patent Document 1 undergoes many operation steps until the uppermost rack is moved to the second station, specifically, the rack separation device holds only the uppermost rack of the plurality of racks in a stacked state which are lifted to the first station and upward by the lifting platform, thereafter, an operation step is performed in which the lifting platform is lowered from the first station to separate only the uppermost rack from the group of the other racks such that the uppermost rack remains at the first station, and the rack transfer device moves the uppermost rack from the first station to the second station. Hence, it is hard to say that the rack can be moved to a component extraction position efficiently and rapidly.

The invention is conceived in light of the above problem, and an object of the invention is to provide an automated analysis device capable of transferring a rack to a predetermined instrument extraction position efficiently and rapidly, the rack being loaded with instruments to be used for an analysis process.

### MEANS FOR SOLVING PROBLEM

In order to achieve the above object, according to an aspect of the invention, there is provided an automated analysis device to obtain measurement information on a predetermined analysis item by processing an analyte, and by measuring the processed analyte, the device including: a conveyance unit to raise and lower a plurality of racks in a vertically stacked state to convey the racks into an analyte processing space, and to retrieve the racks from the analyte processing space, the racks being loaded with instruments to be used for analyte processing. The conveyance unit includes a movement mechanism to move an uppermost rack of a group of the racks stacked vertically, from a rack standby position in the analyte processing space to an extraction position where the instruments are to be extracted for the analyte processing, while maintaining a state where the uppermost rack is stacked on the other lower racks.

In the automated analysis device with the above configuration, the movement mechanism of the conveyance unit moves the uppermost rack of a group of the racks stacked vertically, from the rack standby position in the analyte processing space to the extraction position where the instruments are to be extracted for the analyte processing, while maintaining a state where the uppermost rack is stacked on the other lower racks. Namely, since an intermediate operation to separate the uppermost rack from the lower racks when moving the uppermost rack to the extraction position as in Patent Document 1 described above is not required, the rack can be transferred to the extraction position efficiently and rapidly.

In addition, in the above configuration, it is preferable that each of the racks includes a protrusion formed in one of an upper surface and a lower surface of the rack, and a recess formed in the other, and the racks overlapping each other vertically are stacked in a state where the protrusion and the recess slidably engage each other, and that the movement mechanism moves the uppermost rack from the rack standby position to the extraction position with guidance of the protrusion and the recess while maintaining a state of slidable protrusion and recess engagement between the uppermost rack and a rack below the uppermost rack. According to such a configuration, since the movement of the uppermost rack from the rack standby position to the extraction position is guided by the protrusion and recess engagement between the racks, namely, since movement guidance is performed between the racks, there is no need to provide a separate guidance mechanism. Therefore, the uppermost rack can be transferred to the extraction position with a small number of components efficiently and rapidly.

In addition, in the above configuration, it is preferable that each of the racks includes engagement grooves in side portions facing at least two directions, and that the conveyance unit further includes a positioning mechanism to cause a positioning plate disengageably to engage each of the engagement grooves of the uppermost rack moved to the extraction position by the movement mechanism, to position the uppermost rack at the extraction position. According to such a configuration, since the uppermost rack can be positioned and fixed at the extraction position efficiently, reliably, and easily, work to extract the instruments from the rack stably can be secured.

### EFFECT OF THE INVENTION

According to the invention, there is provided the automated analysis device capable of transferring the rack to a predetermined instrument extraction position efficiently and rapidly, the rack being loaded with the instruments to be used for an analysis process.

### BRIEF DESCRIPTION OF DRAWINGS

Fig. 1 is an overall schematic exterior view of an automated analysis device according to one embodiment of the invention;
Fig. 2 is a schematic plan view illustrating an internal configuration of the automated analysis device in Fig. 1;
Fig. 3 is a side view illustrating a schematic configuration of a conveyance unit of the automated analysis device in Fig. 1;
Fig. 4(a) is a side view of a part of the conveyance unit in Fig. 3, Fig. 4(b) is a schematic configuration view of a retrieval lift provided below an extraction position II, and Fig. 4(c) is a schematic configuration view of a supply lift provided below a rack standby position I;
Fig. 5 is a main part side view schematically illustrating a state where an uppermost rack is moved from the rack standby position I to the extraction position II by a movement mechanism;
Fig. 6 is a plan view schematically illustrating a state where the uppermost rack is positioned at the extraction position II by a positioning mechanism; and
Fig. 7 is a perspective view schematically illustrating a stacked form of racks.

### MODE(S) FOR CARRYING OUT THE INVENTION

Hereinafter, an embodiment of the invention will be described with reference to the drawings.

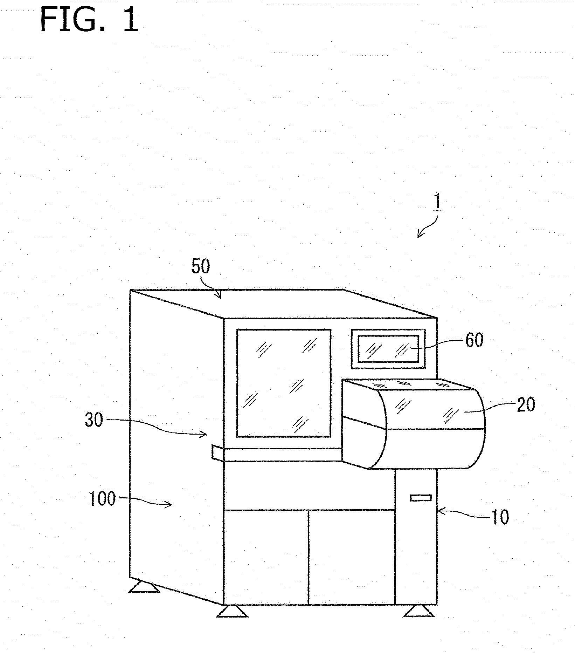

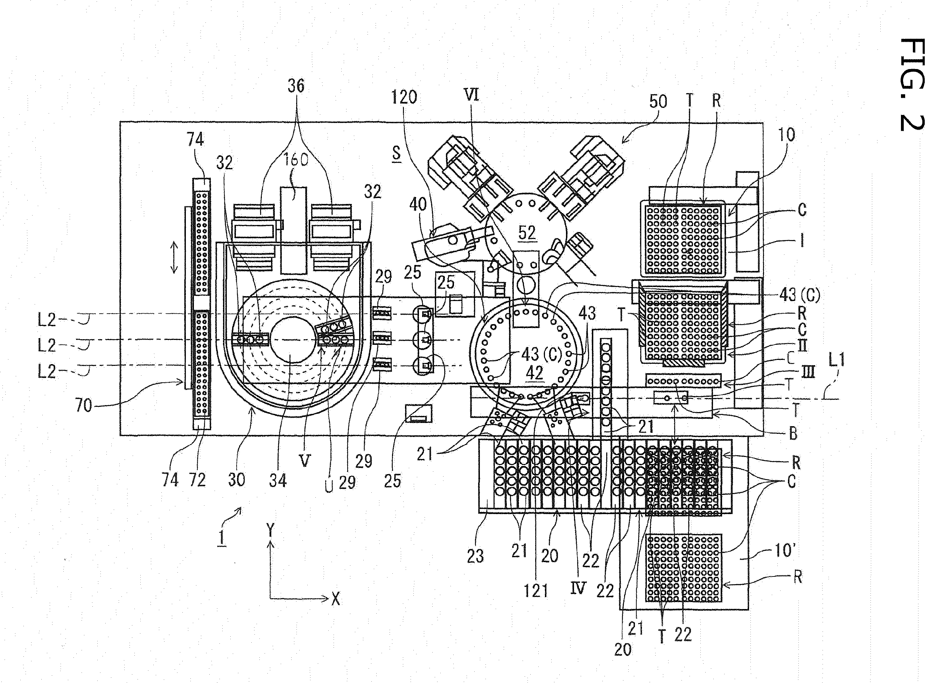

Fig. 1 is an overall schematic exterior view of an automated analysis device of the present embodiment, and Fig. 2 is a schematic plan view illustrating an internal configuration of the automated analysis device in Fig. 1. As illustrated in these drawings, an automated analysis device 1 of the present embodiment includes a conveyance unit 10 to convey a rack; an analyte supply unit 20 to supply a predetermined analyte such as a biological sample; a reagent supply unit 30 to supply a reagent corresponding to a predetermined analysis item; a reaction unit 40 to cause the analyte and the reagent to react with each other; and a processing and measurement unit (in the present embodiment, for example, a B/F separation and measurement unit to be described later) 50 to process the reacted analyte and to measure the processed analyte. The processing units 10, 20, 30, 40, and 50 are disposed inside a housing 100 (refer to Fig. 1). The conveyance unit 10 conveys a rack loaded with a predetermined number of disposable instruments to be used by the automated analysis device 1, for example, in the present embodiment, a rack R in which 60 nozzle tips T to suction the analyte and 60 reaction containers (for example, cuvettes) C into which the analyte is to be dispensed are arranged and held two-dimensionally, to a predetermined instrument extraction position II to be described later.

In addition, the automated analysis device 1 further includes a controller (not illustrated) to control operation of the processing units 10, 20, 30, 40, and 50, and a transfer mechanism (not illustrated) including various transfer units to move in an X-Y direction above the processing units 10, 20, 30, 40, and 50. The transfer mechanism includes, for example, an instrument transfer unit, an analyte transfer unit, a reagent transfer unit, a measurement target transfer unit, etc. The transfer mechanism is capable of grasping an instrument such as the nozzle tip T or the reaction container C using a grasping arm, etc., and moving the instrument in the X-Y direction so as to transfer the nozzle tip T, the reaction container C, etc., or to suction the analyte and the reagent by means of a nozzle. The controller includes a control device body (not illustrated) and a display input unit 60 formed of, for example, a touch panel. Each transfer unit of the transfer mechanism is movable in an X direction and a Y direction in an upper portion inside the housing 100, for example, along rails extending in the X direction and the Y direction, and is further movable (raisable and lowerable) in a vertical direction (Z direction) at a predetermined position.

The conveyance unit 10 conveys a plurality of the racks R loaded with unused nozzle tips T and unused reaction containers C inside the device 1 as follows. First, the plurality of racks R are raised in a vertically stacked state by a lifting mechanism to be conveyed toward a rack standby position (supply side position) I in a space S in which various processing is to be performed on the analyte, etc. in the upper portion inside the housing 100 (hereinafter, simply referred to as a processing space). Thereafter, the racks R are moved from the rack standby position I to an extraction position (retrieval side position) II at which the nozzle tips T and the reaction containers C are to be extracted for analysis and measurement processing, and stand by for a transfer to a tip and reaction container standby position III by the instrument transfer unit. In addition, the racks R that are emptied by extraction of all the nozzle tips T and the reaction containers C are lowered sequentially by the lifting mechanism, and are retrieved.

Specifically, as indicated by an arrow in Fig. 2, an operator can draw the conveyance unit 10 to the outside of the device 1 along the Y direction (conveyance unit that is drawn out is denoted by reference sign 10' in Fig. 2) to retrieve the empty racks R from the conveyance unit 10, and to replenish the conveyance unit 10 with unused racks R loaded with the nozzle tips T and the reaction containers C.

In addition, in the present embodiment, the nozzle tip T and the reaction container C inside the rack R to be located at the extraction position II are held and transferred by a holding portion of the instrument transfer unit that is one transfer unit of the transfer mechanism, provisionally to be placed at the tip and reaction container standby position III located in the vicinity of the conveyance unit 10. However, in another modification example, the reaction container C may be directly transferred from the rack R to the reaction unit 40, and set by the holding portion of the instrument transfer unit without passing through the tip and reaction container standby position III.

Incidentally, as illustrated in Fig. 2, not only a place for the nozzle tips (position below the standby position III, at which two nozzle tips T and/or reaction containers C are illustrated) but also a place in which an operator can replace each rack including the nozzle tips T and/or the reaction containers C with a hand (position above the standby position III, at which one rack is illustrated) can be provided at the tip and reaction container standby position III.

The analyte supply unit 20 is disposed on an analyte table 23 that is movable along the X direction in Fig. 2, and a plurality of analyte racks 22 each having a box shape are arranged, for example, along a movement direction of the analyte table 23. In addition, each of the analyte racks 22 is loaded with a plurality of analyte containers 21, and each of the analyte containers 21 stores the analyte to be analyzed and measured. Particularly, in the present embodiment, for example, an operation mode is carried out in which the analyte supply unit 20 to be located on a right side in Fig. 2 moves to a left side in Fig. 2 at a predetermined timing in an analysis sequence of the automated analysis device 1, and one analyte rack 22 including the plurality of analyte containers 21 is transferred to an analyte suction position IV between the reaction unit 40 and the tip and reaction container standby position III, and stands by at this position.

Since the tip and reaction container standby position III is provided, a first uniaxial transfer line (analyte transfer line) L1 on which the tip and reaction container standby position III, the analyte suction position IV, and at least a part of the reaction unit 40 are lined up along a straight line is formed in the processing space S. For this reason, a series of operations such as the installation of the analyte suction nozzle to the nozzle tip T, the suctioning of the analyte, and the dispensing of the analyte into the reaction containers can be completed only by a movement of the analyte transfer unit (not illustrated) including an analyte suction nozzle along the first uniaxial transfer line in a uniaxial direction (X-axis direction). Incidentally, the uniaxial direction referred to here means that a movement direction on an X-Y plane which is a transfer direction is uniaxial. After the analyte transfer unit moves in the uniaxial direction on the X-Y plane to reach a desired position, the analyte transfer unit moves in the Z direction (height direction) for an operation to install the nozzle tip or to suction or dispense the analyte, etc. Specifically, first, the analyte suction nozzle (not illustrated) is moved in a positive direction of an X axis (right direction in Fig. 2) by the analyte transfer unit, and the nozzle tip T placed at the tip and reaction container standby position III provisionally is to be connected to a distal end of the analyte suction nozzle (when connected, the analyte suction nozzle is raised and lowered in a Z-axis direction by the analyte transfer unit). Thereafter, the analyte suction nozzle is further moved in a negative direction of the X axis (left direction in Fig. 2) while holding the nozzle tip T at the distal end, suctions the analyte through the nozzle tip T from the analyte container 21 that stands by at the analyte suction position IV, and is further moved toward the reaction unit 40 in the negative direction of the X axis.

At this time, the unused reaction container C placed at the tip and reaction container standby position III provisionally is already transferred to and set in the reaction unit 40 by the above-described instrument transfer unit, and is on standby. Therefore, the analyte suction nozzle dispenses (discharges) the analyte, which is suctioned through the nozzle tip T, into the reaction container C on the reaction unit 40. Thereafter, the analyte transfer unit moves the analyte suction nozzle in the positive direction of the X axis toward a tip disposal unit 121 located on the first uniaxial transfer line L1 (provided between the reaction unit 40 and the analyte suction position IV), and the used nozzle tip T is separated from the analyte suction nozzle, and is disposed of by the tip disposal unit 121.

The reaction unit 40 includes a rotary table 42 that is to be driven rotationally, and a plurality of reaction container-supporting portions 43 are provided at predetermined intervals over an entire periphery of an outer peripheral portion of the rotary table 42. The unused reaction container C is transferred to and set in the reaction container-supporting portion 43 by the instrument transfer unit including the holding portion as described above. Then, as described above, the analyte is discharged from the analyte suction nozzle into the reaction container C that is rotated to an analyte receiving (dispensing) position by the rotary table 42.

In the reagent supply unit 30, a plurality of reagent storage portions 32 that store reagents corresponding to various types of analysis items are held, for example, in a unit form by a rotary table 34, and the reagent storage portion 32 corresponding to an analysis item in the reaction unit 40 is moved to each corresponding reagent suction position V by rotation of the rotary table 34 (only one reagent suction position is denoted by reference sign V in Fig. 2) located on a second uniaxial transfer line L2 to be described later. The reagent supply unit 30 of the present embodiment includes a plurality of reagent storage units U, and a predetermined number of the reagent storage units U are radially arranged in a circumferential direction of the rotary table 34. Each of the reagent storage units U stores and holds an elongated container unit, in which reagent containers including the plurality (three in the drawing) of reagent storage portions 32 are connected or integrally formed, inside a container holder. In addition, the reagent supply unit 30 further includes a cooling device 36 to cool the reagent, and a reagent container lid opening and closing mechanism 160 to open and close a container lid that opens and closes an opening of each of the reagent storage portions 32 forming the reagent storage unit U.

A conductive tip supply unit 70 is provided outside the reagent supply unit 30, namely, at a position that is adjacent to the reagent supply unit 30 and is opposite the reaction unit 40. The conductive tip supply unit 70 includes a rack 74 loaded with a plurality of conductive tips 72, and connects the conductive tip 72 to a distal end of a reagent suction nozzle as needed when an analysis item is analyzed for which a nozzle is difficult to share with a normal analysis item. Specifically, the conductive tip supply unit 70 moves the rack 74 along the Y direction under position control using a position sensor, to locate the conductive tips 72 on the rack 74 on the second uniaxial transfer line L2 to be described later. Incidentally, a plurality (three in the present embodiment) of nozzle cleaning units 29 to clean the reagent suction nozzle and a plurality (three in the present embodiment) of tip disposal units 25 to dispose of the tip are provided between the reagent supply unit 30 and the reaction unit 40 to be located on the second uniaxial transfer line L2 to be described later.

In a region of the processing space S in which the conductive tip supply unit 70, the reagent supply unit 30, the nozzle cleaning unit 29, the tip disposal unit 25, and the reaction unit 40 are lined up along a straight line, the second uniaxial transfer line (reagent transfer line) L2 is formed on which the reagent transfer unit (not illustrated) for a reagent transfer that is one transfer unit of the transfer mechanism moves only in the uniaxial direction (X-axis direction) along the straight line. Particularly, in the present embodiment, since the three nozzle cleaning units 29 and the three tip disposal units 25 are provided, three second uniaxial transfer lines L2 are also provided (certainly, the number of the second uniaxial transfer lines L2 is not limited to 3, and may be 4 or more or may be 2 or less) . Specifically, a holding portion that holds the reagent suction nozzle (not illustrated) is moved only in the X-axis direction along each of the second uniaxial transfer lines L2 by the reagent transfer unit.

Regarding a normal analysis item, the reagent suction nozzle corresponding to each of the second uniaxial transfer lines L2 directly suctions a reagent corresponding to an analysis item from the reagent storage portion 32 to be located at the reagent suction position V on the rotary table 34 through a nozzle suction portion at a distal end of the reagent suction nozzle in the reagent supply unit 30, and thereafter, is moved in the positive direction of the X axis toward the reaction unit 40. At this time, in the reaction unit 40, the reaction container C that has already received the analyte at the above-described analyte receiving position is rotated to a reagent receiving position by the rotary table 42. Therefore, the reagent suction nozzle is capable of dispensing (discharging) the suctioned reagent into the reaction container C. Thereafter, the reagent suction nozzle is moved along the negative direction of the X axis, and is cleaned in the nozzle cleaning unit 29.

On the other hand, in the case where an analysis item is analyzed for which a nozzle is difficult to share with a normal analysis item, for example, when nozzle cleaning alone is not sufficient, the conductive tip 72 may be connected to the distal end of the reagent suction nozzle as needed. In such a case, it is preferable that the conductive tip 72 is connected to the distal end of the reagent suction nozzle in the conductive tip supply unit 70 on the second uniaxial transfer line L2 before the reagent is suctioned in the reagent supply unit 30 (when connected, the reagent suction nozzle is raised and lowered in the Z-axis direction by the reagent transfer unit) . When the conductive tip 72 is connected, the reagent suction nozzle is further moved in the positive direction of the X axis while holding the conductive tip 72 at the distal end, and suctions the reagent through the conductive tip 72 in the reagent supply unit 30. The reagent suction nozzle that has suctioned the reagent is further moved in the positive direction of the X axis toward the reaction unit 40, and dispenses (discharges) the reagent into the reaction container C located at the reagent receiving position as described above. Thereafter, the used reagent suction nozzle is moved in the negative direction of the X axis toward a corresponding tip disposal unit 25 of the tip disposal units 25 by the reagent transfer unit, and the used conductive tip 72 is separated from the reagent suction nozzle, and is disposed of by the tip disposal unit 25.

A mixture of the analyte and the reagent dispensed into the reaction container C as described above in the reaction unit 40 is subjected to a reaction on the rotary table 42 at a predetermined temperature for a predetermined time, and thereafter, the reaction container C in which a reaction product is formed is rotated to a reaction container extraction position VI by rotation of the rotary table 42. The reaction container C located at the reaction container extraction position VI is grasped and introduced into the processing and measurement unit 50 by a holding portion (grasping arm, etc.) to be transferred by the measurement target transfer unit (not illustrated) that is one transfer unit of the transfer mechanism.

The processing and measurement unit 50 performs predetermined processing on the introduced reaction product, and executes measurement electrically and optically. Specifically, for example, in analysis and measurement using immunoassay, B/F separation is performed to clean and dispose of a labeled antibody that does not form an immune complex, a cleaning unit and a stirring unit for that purpose and a magnet to be used for the B/F separation are provided, and a measurement unit 120 is also provided which suctions a processed product processed thereby to measure the processed product on a lower side based on electrochemiluminescence. In that case, the processing and measurement unit 50 may be called a B/F separation and measurement unit 50. Incidentally, the used reaction container C on which the measurement is completed is moved to a predetermined position by rotation of a rotary table 52, is grasped by a holding portion to be transferred by a corresponding transfer unit forming the transfer mechanism, and is disposed of by a predetermined disposal unit.

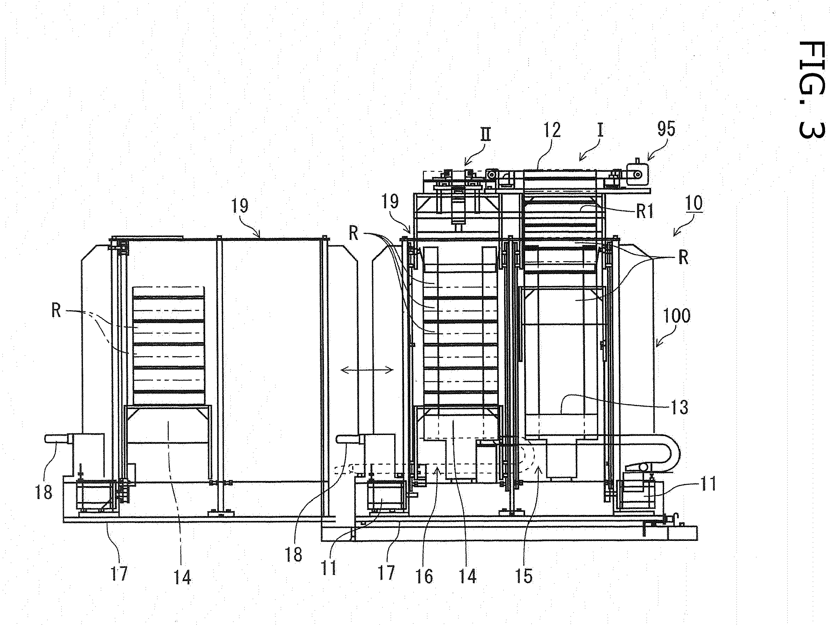

Next, a structure of the conveyance unit 10 described above will be described in detail with reference to Figs. 3 to 7.

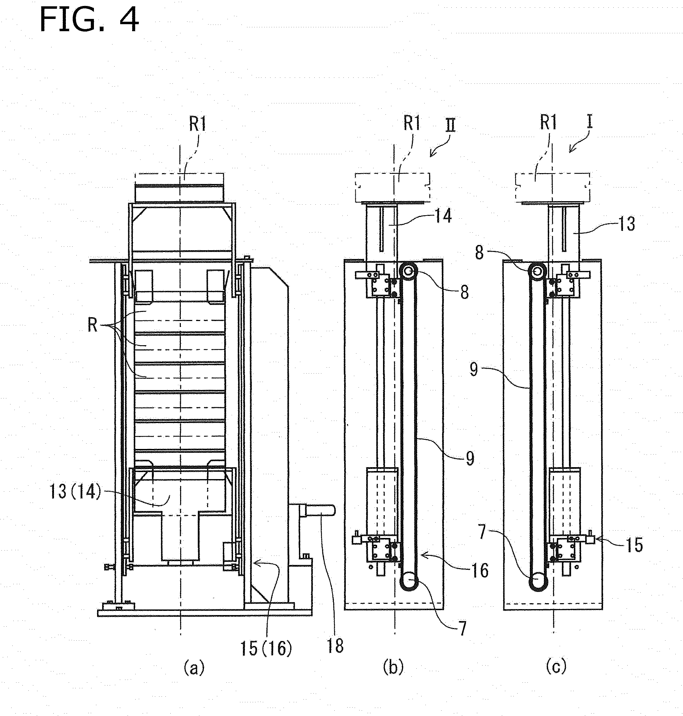

As described above, as illustrated in Figs. 3 and 4, the conveyance unit 10 causes the lifting mechanism to raise the plurality (five in the present embodiment) of racks R in a vertically stacked state to convey the racks R toward the rack standby position (supply side position) I in the processing space S inside the housing 100, the racks R being loaded with the nozzle tips T and the reaction containers C. Thereafter, the nozzle tips T and the reaction containers C are moved to the extraction position (retrieval side position) II to be extracted for analysis and measurement processing, and the racks R that are emptied by extraction of all the nozzle tips T and the reaction containers C are lowered by the lifting mechanism, and are retrieved sequentially. For this reason, a supply lifting platform 13 for the rack R on which the unused nozzle tips and the unused reaction containers C are mounted (hereinafter, also referred to as the "unused rack R") is disposed below the rack standby position I, and a retrieval lifting platform 14 for the used empty rack R is disposed below the extraction position II.

Specifically, as illustrated in Figs. 3 and 4, a supply lift 15 is disposed below the rack standby position I, and a retrieval lift 16 is disposed below the extraction position II. The lifts 15 and 16 have the same structure, and are stored in a rack lifting chamber 19 inside the housing 100. In addition, the rack lifting chamber 19 that accommodates the lifts 15 and 16 is attached to a movable floor 17. A door (not illustrated) is provided on a front side of the rack lifting chamber 19. When the door is opened, an operator can grasp a handle 18 provided at a front of the rack lifting chamber 19, to draw the rack lifting chamber 19, which accommodates the lifts 14 and 15, out from a housing 100 side to a front side, together with the movable floor 17 (refer to an arrow in Fig. 3). Therefore, the rack R on which new unused nozzle tips and reaction containers C are mounted can be set on the supply lifting platform 13, and the used rack R can be removed from above the retrieval lifting platform 14 (the conveyance unit that is drawn out is denoted by reference sign 10' in Fig. 2) .

Incidentally, both of the lifting platforms 13 and 14 of the supply lift 15 and the retrieval lift 16 are raised and lowered by driving of a timing belt 9 suspended between a lower drive pulley 7 and an upper driven pulley 8 (refer to Fig. 4), and the lower drive pulley is driven rotationally by a motor 11 (refer to Fig. 3). In addition, the conveyance unit 10 also includes a sensor (not illustrated) to detect a maximum lowered position and a maximum raised position of the lifting platforms 13 and 14.

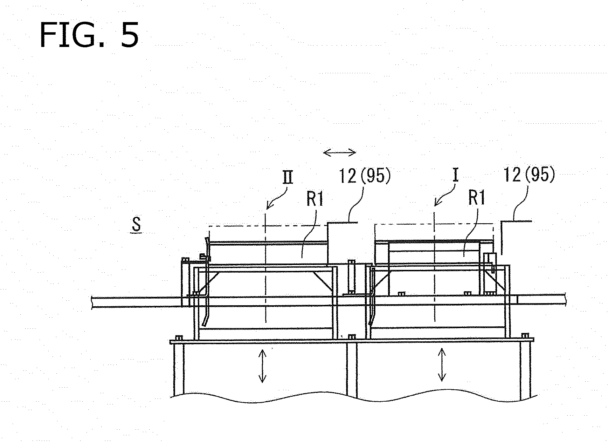

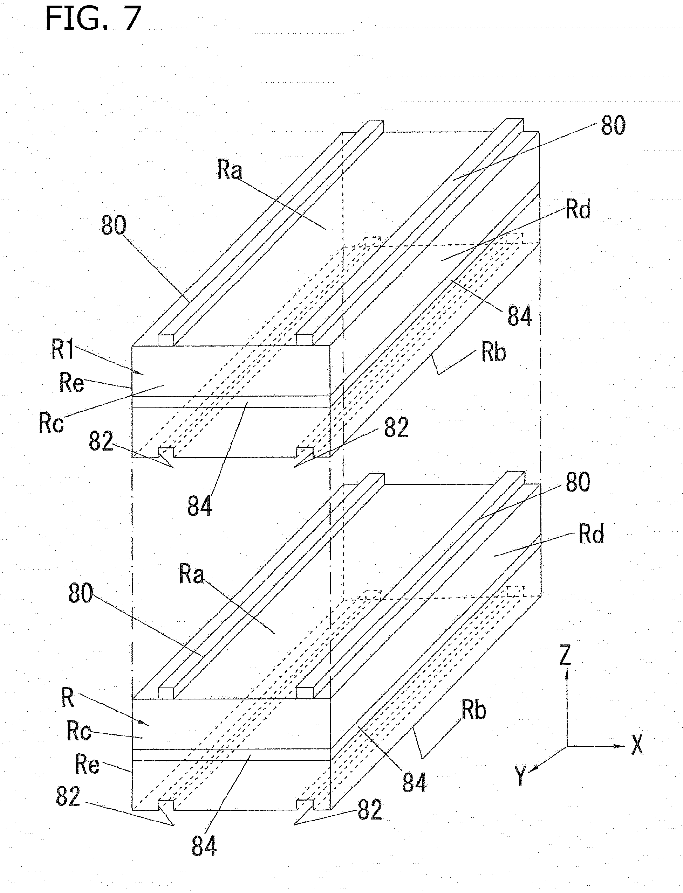

In addition, the conveyance unit 10 of the present embodiment includes a movement mechanism 95 (refer to Figs. 3 and 5). The movement mechanism 95 moves an uppermost rack R1 of a group of the racks stacked vertically (in the present embodiment, formed of five racks R stacked vertically), from the rack standby position I to the extraction position II while maintaining a state where the uppermost rack R1 is stacked on the other lower racks R. In addition, in regard to the movement of the racks by the movement mechanism 95, as illustrated in Fig. 7, each of the racks R in the present embodiment includes a pair of protrusions 80 on one of an upper surface Ra side and a lower surface Rb side, for example, in the present embodiment, which are formed on the upper surface Ra side, and a pair of recesses 82 formed in a lower surface Rb that is the other. The racks R and R (R1 and R) overlapping each other vertically are stacked in a state where the protrusions 80 and the recesses 82 slidably engage each other. Incidentally, in Fig. 7, in order to clarify a form of the formation of and an engagement relationship between the protrusions 80 and the recesses 82, for the purpose of convenience, the upper and lower racks R1 and R are illustrated as being separated from each other; however, in effect, the protrusions 80 and the recesses 82 are vertically stacked in an engaged state with each other. In addition, since the upper surface Ra of the rack R is open to allow the nozzle tip T and the reaction container C which are instruments to be input and output, the protrusion 80 is provided, for example, along an upper end portion of a side wall (frame portion) of the rack R or along an upper end portion of a partition plate that partitions the nozzle tip T and the reaction container C off from each other. In addition, in the present embodiment, the protrusion 80 is provided on the upper surface Ra side, and the recess 82 is provided in the lower surface Rb, but on the contrary, the recess 82 may be provided on the upper surface Ra side, and the protrusion 802 may be provided in the lower surface Rb.

In this case, the pair of protrusions 80 and 80 are located separately from each other so as to be allocated on both sides of the upper surface Ra of the rack R (R1) along the X direction, and extend over the entire length of the rack along a longitudinal direction (Y direction) of the rack R (R1). Similarly, the pair of recesses 82 and 82 are also located separately from each other so as to be allocated on both sides of the lower surface Rb of the rack R (R1) along the X direction, and extend over the entire length of the rack along the longitudinal direction (Y direction) of the rack R (R1).

Then, in such a rack form, the movement mechanism 95 causes a pushing member 12 (refer to Figs. 3 and 5) to move the uppermost rack R1 from the rack standby position I to the extraction position II with guidance of the protrusions 80 and the recesses 82 while maintaining a state of slidable protrusion and recess engagement between the uppermost rack R1 and the rack R therebelow.

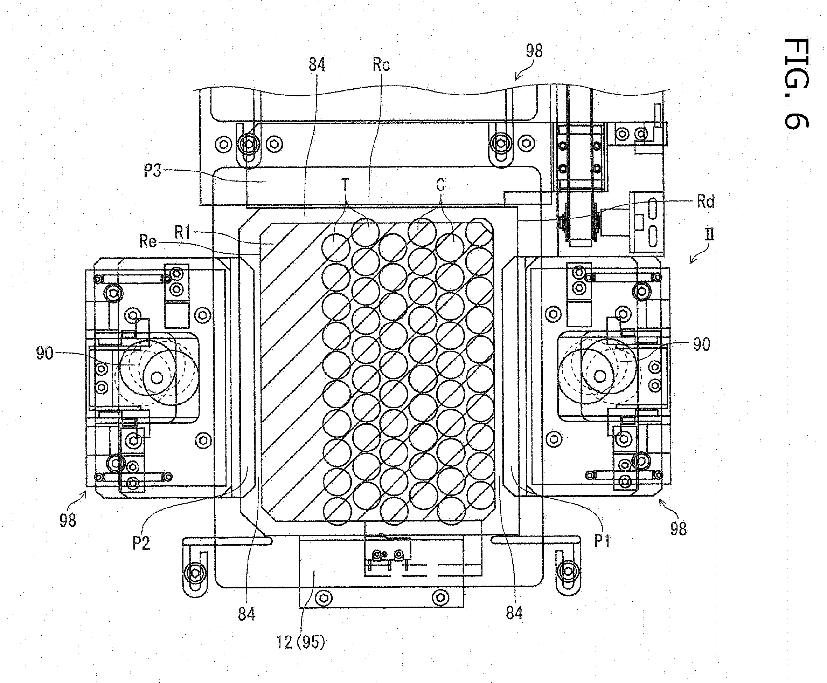

In addition, the conveyance unit 10 of the present embodiment also includes a positioning mechanism 98 (refer to Fig. 6) to position the uppermost rack R1, which is moved to the extraction position II by the movement mechanism 95, at the extraction position II. In addition, regarding the positioning of the rack by the positioning mechanism 98, as illustrated in Figs. 6 and 7, each of the racks R in the present embodiment includes an engagement groove 84 in each of side portions facing at least two directions, particularly, in the present embodiment, in each of side portions facing three directions, specifically, in each of right and left side portions Rd and Re on both sides along the X direction and one side portion (front) Rc along the Y direction.

Then, in such a rack form, as illustrated in Fig. 6, the positioning mechanism 98 causes positioning plates P1, P2, and P3 disengageably to engage the engagement grooves 84 of the uppermost rack R1 moved to the extraction position II by the movement mechanism 95, to position the uppermost rack R1 at the extraction position II. In this case, each of the positioning plates P1, P2, and P3 advances and retreats with respect to the rack R1 to engage and disengage the engagement groove 84, for example, when an eccentric rotor 90 is driven rotationally.

As described above, in the automated analysis device 1 of the present embodiment, since the movement mechanism 95 of the conveyance unit 10 moves the uppermost rack R1 of a group of the racks stacked vertically, from the rack standby position I to the extraction position II while maintaining a state where the uppermost rack R1 is stacked on the other lower racks R, namely, since an intermediate operation to separate the uppermost rack from the lower racks when moving the uppermost rack to the extraction position as in Patent Document 1 described above is not required, the rack R can be transferred to the extraction position efficiently and rapidly.

In addition, in the present embodiment, each rack R (R1) includes the protrusions 80 formed on one of the upper surface side and the lower surface side thereof, and the recesses 82 formed on the other. The racks R overlapping each other vertically are stacked in a state where the protrusions 80 and the recesses 82 slidably engage each other. The movement mechanism 95 moves the uppermost rack R1 from the rack standby position I to the extraction position II with guidance of the protrusions 80 and the recesses 82 while maintaining a state of slidable protrusion and recess engagement between the uppermost rack Rl and the rack R therebelow. For this reason, the movement of the uppermost rack R1 from the rack standby position I to the extraction position II is guided by the protrusion and recess engagement between the racks, namely, movement guidance is performed between the racks. Therefore, there is no need to provide a separate guidance mechanism, and as a result, the uppermost rack can be transferred to the extraction position with a small number of components efficiently and rapidly.

In addition, in the present embodiment, each of the racks R includes the engagement grooves 84 in the side portions facing at least two directions. The conveyance unit 10 further includes the positioning mechanism 98 to cause the positioning plates P1, P2, and P3 disengageably to engage the engagement grooves 84 of the uppermost rack R1 moved to the extraction position II by the movement mechanism 95, to position the uppermost rack R1 at the extraction position. For this reason, the uppermost rack R1 can be positioned and fixed at the extraction position II efficiently, reliably, and easily. Therefore, work to extract the instruments (the tip T and the reaction container C) from the rack R stably can be secured.

Incidentally, the invention is not limited to the above-described embodiment, and various modifications can be carried out without departing from the concept of the invention. For example, in the above-described embodiment, the nozzle tip T and the reaction container C are used as disposable instruments to be loaded into the rack; however, the disposable instruments are not limited thereto. Such instruments may be appropriately changed according to the type of an analysis process. In addition, the configurations and the forms of the processing units of the analysis device are not also limited to those described above, and can be variously changed according to the application.

Further, individual configurations described in the various embodiments described in the specification, such as the structure of the rack, the structure of the analyte or reagent holding portion, the conveyance unit to move and retrieve the rack, the reagent lid opening and closing mechanism, the configuration where the analyte transfer line or the reagent transfer line is aligned with the uniaxial transfer line L1 or L2, and other individual configurations can also be extracted from each of the embodiments as needed, and combined appropriately.

In addition, the specific positions I to IX described in the embodiment are provided as an example, and can be appropriately changed to positions conforming to conditions required by the invention described in the specification.

### EXPLANATIONS OF LETTERS OR NUMERALS

- 1: AUTOMATED ANALYSIS DEVICE

- 10: CONVEYANCE UNIT
- 80: PROTRUSION
- 82: RECESS
- 84: ENGAGEMENT GROOVE
- 95: MOVEMENT MECHANISM
- 98: POSITIONING MECHANISM
- C: REACTION CONTAINER (INSTRUMENT)
- R, R1: RACK
- S: ANALYTE PROCESSING SPACE
- T: NOZZLE TIP (INSTRUMENT)
- I: RACK STANDBY POSITION
- II: EXTRACTION POSITION

## Claims

1. An automated analysis device to obtain measurement information on a predetermined analysis item by processing an analyte, and by measuring the processed analyte, the device comprising:
a conveyance unit to raise and lower a plurality of racks in a vertically stacked state to convey the racks into an analyte processing space, and to retrieve the racks from the analyte processing space, the racks being loaded with instruments to be used for analyte processing,
wherein the conveyance unit includes a movement mechanism to move an uppermost rack of a group of the racks stacked vertically, from a rack standby position in the analyte processing space to an extraction position where the instruments are to be extracted for the analyte processing, while maintaining a state where the uppermost rack is stacked on the other lower racks.

2. The automated analysis device according to claim 1,
wherein each of the racks includes a protrusion formed on one of an upper surface side and a lower surface side of the rack, and a recess formed on the other, and the racks overlapping each other vertically are stacked in a state where the protrusion and the recess slidably engage each other, and
the movement mechanism moves the uppermost rack from the rack standby position to the extraction position with guidance of the protrusion and the recess while maintaining a state of slidable protrusion and recess engagement between the uppermost rack and a rack below the uppermost rack.

3. The automated analysis device according to claim 1 or 2,
wherein each of the racks includes engagement grooves in side portions facing at least two directions, and
the conveyance unit further includes a positioning mechanism to cause a positioning plate disengageably to engage each of the engagement grooves of the uppermost rack moved to the extraction position by the movement mechanism, to position the uppermost rack at the extraction position.
